(19) Europäisches Patentamt
European Patent Office
Office européen des brevets

(11) EP 4 350 720 A1

(12) EUROPEAN PATENT APPLICATION
published in accordance with Art. 153(4) EPC

(43) Date of publication:
**10.04.2024 Bulletin 2024/15**

(21) Application number: **22811329.6**

(22) Date of filing: **24.05.2022**

(51) International Patent Classification (IPC):
***H01F 6/06*** *(2006.01)* ***H01B 7/02*** *(2006.01)*
***H01B 12/04*** *(2006.01)*

(52) Cooperative Patent Classification (CPC):
**H01B 7/02; H01B 12/04; H01F 6/06;** Y02E 40/60

(86) International application number:
**PCT/JP2022/021277**

(87) International publication number:
**WO 2022/250059 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.05.2021 JP 2021088780**

(71) Applicant: **FURUKAWA ELECTRIC CO., LTD.**
**Tokyo 100-8322 (JP)**

(72) Inventors:
- **KIM, Yonghoon**
  **Tokyo 100-8322 (JP)**
- **II, Hideki**
  **Tokyo 100-8322 (JP)**
- **SATO, Takumi**
  **Tokyo 100-8322 (JP)**

(74) Representative: **Winter, Brandl - Partnerschaft mbB**
**Alois-Steinecker-Straße 22**
**85354 Freising (DE)**

# (54) SUPERCONDUCTING RECTANGULAR WIRE MATERIAL FOR SUPERCONDUCTING COIL, AND SUPERCONDUCTING COIL

(57) The superconducting rectangular wire for a superconducting coil, comprises: an NbTi-based or $Nb_3Sn$-based wire having a surface coated with a copper-based material; and a fusible resin layer including a thermoplastic fusible resin and coating an outer peripheral surface of the wire, in which in a cross section of the superconducting rectangular wire for a superconducting coil, a radius of curvature (R2) of a corner portion of the fusible resin layer is equal to or less than a radius of curvature (R1) of a corner portion of the wire.

FIG. 1

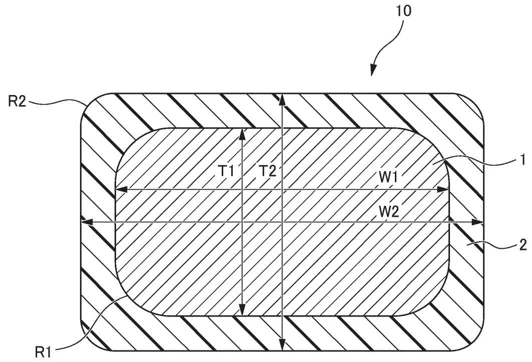




Processed by Luminess, 75001 PARIS (FR)

## Description

### TECHNICAL FIELD

The present disclosure relates to a superconducting rectangular wire for a superconducting coil and a superconducting coil.

### BACKGROUND ART

A superconducting wire exhibits superconducting performance at an extremely low temperature. A superconducting coil is obtained by winding such a superconducting wire around a winding frame. The superconducting wire has the advantage of being able to carry extremely large currents compared to an electric wire such as a normal copper wire, but when large currents are applied, large electromagnetic forces are generated, which may cause vibration and heat generation. For the superconducting wire, when the temperature rises due to such heat generation, even if a current smaller than the critical current value of the superconducting wire is supplied, the superconducting state breaks down to become a normal conduction state (hereinafter referred to as a "quenching"), and there is an issue that liquid helium evaporates at once. Therefore, a means for maintaining a superconducting state and preventing quenching has been awaited.

For example, Patent Document 1 discloses a superconducting coil including a winding frame and a superconducting wire wound around the winding frame. The superconducting coil of Patent Document 1 includes, between the winding frame and the superconducting wire, a first resin layer including a thermoplastic resin provided so as to surround the outer periphery of the superconducting wire; a second resin layer including a thermosetting resin disposed on the curved surface portion of the inner peripheral surface of the superconducting coil; and a mixed layer disposed between the first resin layer and the second resin layer and including a mixture of the thermoplastic resin and the thermosetting resin.

However, in the conventional art such as Patent Document 1, there is an issue that, although the interfacial separation between members can be avoided, the occurrence of quenching due to insufficient adhesion between superconducting wires cannot be avoided.

### Citation List

#### Patent Document

Patent Document 1: Japanese Patent No. 6276406

### DISCLOSURE OF THE INVENTION

#### Problems to be Solved by the Invention

It is an object of the present disclosure to provide a superconducting rectangular wire for a superconducting coil and a superconducting coil capable of suppressing quenching compared to conventional art.

#### Means for Solving the Problems

[1] A superconducting rectangular wire for a superconducting coil includes an NbTi-based or $Nb_3Sn$-based wire having a surface coated with a copper-based material, and a fusible resin layer including a thermoplastic fusible resin and coating an outer peripheral surface of the wire, in which in a cross section of the superconducting rectangular wire for a superconducting coil, a radius of curvature (R2) of a corner portion of the fusible resin layer is equal to or less than a radius of curvature (R1) of a corner portion of the wire.

[2] In the superconducting rectangular wire for a superconducting coil according to [1] above, the fusible resin layer has an average thickness of 0.005 mm or more and 0.100 mm or less.

[3] In the superconducting rectangular wire for a superconducting coil according to [1] or [2] above, in the cross section of the superconducting rectangular wire for a superconducting coil, the radius of curvature (R2) of the corner portion of the fusible resin layer satisfies the following Expressions (1) and (2):

[Math. 1]

$$0.10 \leq R2 \leq R2_{max} \cdots \text{Expression(1)}$$

$$R2_{max}[\text{mm}] = \sqrt{A \times \frac{\left(\begin{array}{c}\text{Cross-sectional width W2 of}\\\text{superconducting rectangular wire}\end{array}\right)\times\left(\begin{array}{c}\text{Cross-sectional thickness T2 of}\\\text{superconducting rectangular wire}\end{array}\right)}{4-\pi}} \cdots$$

Expression(2)

where A is a first radius of curvature coefficient in Expression (2).

[4] In the superconducting rectangular wire for a superconducting coil according to any one of [1] to [3] above, the fusible resin layer includes one or more resins selected from a phenoxy resin, a polyamide resin, or a polyester resin.

[5] The superconducting rectangular wire for a superconducting coil according to any one of [1] to [4] above further includes an insulating resin layer including an insulating resin provided between the wire and the fusible resin layer.

[6] In the superconducting rectangular wire for a superconducting coil according to [5] above, the insulating resin layer includes one or more resins selected from a polyvinyl formal resin, a polyamide-imide resin, a polyimide resin, a polyester resin, or a polyurethane resin.

[7] In the superconducting rectangular wire for a superconducting coil according to [5] or [6] above, the insulating resin layer has an average thickness of 0.005 mm or more and 0.100 mm or less.

[8] In the superconducting rectangular wire for a superconducting coil according to any one of [1] to [7] above, the wire is a rectangular wire, and the radius of curvature (R1) of the corner portion of the wire is 0.10 mm or more and 0.40 mm or less.

[9] In the superconducting rectangular wire for a superconducting coil according to any one of [1] to [8] above, the wire is a rectangular wire, and the radius of curvature (R1) of the corner portion of the wire satisfies the following Expressions (3) and (4):

[Math. 2]

$$0.10 \leq R1 \leq R1_{max} \cdots \text{Expression (3)}$$

$$R1_{max}[\text{mm}] = \sqrt{B \times \frac{\left(\begin{array}{c}\text{Cross-sectional width W1}\\\text{of wire}\end{array}\right)\times\left(\begin{array}{c}\text{Cross-sectional thickness T1}\\\text{of wire}\end{array}\right)}{4-\pi}} \cdots$$

Expression(4)

where B is a second radius of curvature coefficient in Expression (4).

[10] A superconducting coil includes a winding frame, and a superconducting portion including the superconducting rectangular wire for a superconducting coil according to any one of [1] to [9] above, the superconducting rectangular wire being spirally wound around a body portion of the winding frame, in which the superconducting portion has a void ratio of 4.0% or less.

Effects of the Invention

According to the present disclosure, it is possible to provide a superconducting rectangular wire for a superconducting coil and a superconducting coil capable of suppressing quenching compared to conventional art.

BRIEF DESCRIPTION OF THE DRAWINGS

FIG. 1 is a cross-sectional view showing an example of a superconducting rectangular wire for a superconducting coil according to an embodiment.

FIG. 2 is a cross-sectional view showing another example of the superconducting rectangular wire for a superconducting coil according to the embodiment.

FIG. 3 is a sectional view showing an example of a superconducting coil according to the embodiment.

FIG. 4 is a sectional view showing another example of the superconducting coil according to the embodiment.

PREFERRED MODE FOR CARRYING OUT THE INVENTION

Hereinafter, an embodiment will be described in detail.

As a result of extensive research, the present inventors have found that quenching can be suppressed compared to conventional art by controlling the shape of the cross section of each of a wire and a fusible resin layer constituting a superconducting rectangular wire for a superconducting coil, and have completed the present disclosure based on such findings.

A superconducting rectangular wire for a superconducting coil according to the embodiment includes an NbTi-based or $Nb_3Sn$-based wire having a surface coated with a copper-based material, and a fusible resin layer including a thermoplastic fusible resin and coating an outer peripheral surface of the wire. In a cross section of the superconducting rectangular wire for a superconducting coil, a radius of curvature (R2) of a corner portion of the fusible resin layer is equal to or less than a radius of curvature (R1) of a corner portion of the wire.

First, the superconducting rectangular wire for a superconducting coil (hereinafter, also simply referred to as a superconducting rectangular wire) will be described. FIG. 1 is a cross-sectional view showing an example of the superconducting rectangular wire for a superconducting coil according to the embodiment. FIG. 2 is a cross-sectional view showing another example of the superconducting rectangular wire for a superconducting coil according to the embodiment. A superconducting rectangular wire 10 includes a wire 1 and a fusible resin layer 2. As described later, the superconducting rectangular wire 10 is a member constituting a superconducting coil 50.

The wire 1 constituting the superconducting rectangular wire 10 is an NbTi-based or $Nb_3Sn$-based wire having a surface coated with a copper-based material. The copper-based material is copper or a copper alloy.

From the viewpoint of suppressing the quenching of the superconducting coil, the wire 1 is preferably a circular wire (round wire) or a rectangular wire, more preferably a rectangular wire. When the wire 1 has such a shape, the void ratio of the superconducting coil can be reduced, and a large current density can be obtained. Furthermore, since the fused area (contact area) between the superconducting rectangular wires 10 is increased, the fused force can be increased.

It is preferable that the wire 1 is a rectangular wire and the radius of curvature (R1) of the corner portion of the wire 1 in the cross section of the superconducting rectangular wire 10 is 0.10 mm or more and 0.40 mm or less. When the wire 1 is a rectangular wire and the radius of curvature (R1) of the wire 1 is 0.10 mm or more, it is possible to prevent the wire 1 from getting caught between the wires 1 and causing scratches on the surface of the wire 1 when the wire 1 is wound. Furthermore, when the wire 1 is a rectangular wire and the radius of curvature (R1) of the wire 1 is 0.40 mm or less, the void ratio of the superconducting coil can be reduced, so that quenching can be suppressed.

As shown in FIGS. 1 and 2, when the wire 1 is a rectangular wire, from the viewpoint of the winding property of the wire 1 and the suppression of quenching, in the cross section of the superconducting rectangular wire 10, the thickness T1 (short side) of the wire 1 is preferably 0.20 mm or more and 3.00 mm or less, and the width W1 (long side) of the wire 1 is preferably 0.40 mm or more and 10.00 mm or less.

The fusible resin layer 2 constituting the superconducting rectangular wire 10 coats the outer peripheral surface of the wire 1. The fusible resin layers 2 include a thermoplastic fusible resin and are fused to each other by heating.

It is preferable that the fusible resin layer 2 includes one or more resins selected from a phenoxy resin, a polyamide resin, or a polyester resin because the fusible resin layer 2 can be fused under low temperature conditions and good fused characteristics can be obtained.

The phenoxy resin forming the fusible resin layer 2 is also called polyhydroxyether and has a molecular weight of 10000 or more, and has a structure represented by the following Formula (a). The phenoxy resin can be used as a varnish dissolved in a solvent such as m-cresol.

[Chem. 1]

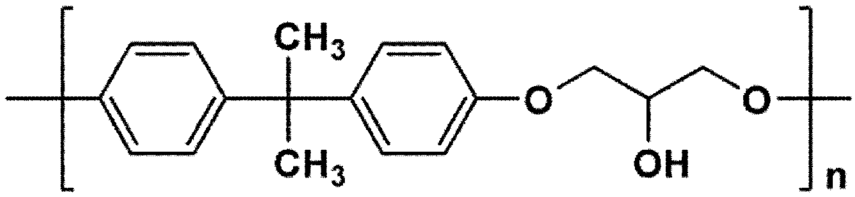

· · · (a)

The polyamide resin forming the fusible resin layer 2 is preferably a polyamide random copolymer having a relatively lower melting point than simple polyamide. For example, a polyamide 6/polyamide 12 copolymer, a polyamide 6/polyamide 11 copolymer, and a polyamide 6/polyamide 66 copolymer are preferable, and among these, a polyamide 6/polyamide 12 copolymer and a polyamide 6/polyamide 11 copolymer are more preferable because of their low melting points.

Since the melting point of the polyamide copolymer varies depending on the composition ratio of each resin, the composition ratio having the lowest melting point can be selected and used. For example, the polyamide 6/polyamide 11 copolymer has the lowest melting point of 150°C when the polyamide 6 is 30 weight %. The polyamide resin can be used as a varnish dissolved in a solvent such as m-cresol.

The average thickness of the fusible resin layer 2 is preferably 0.005 mm or more and 0.100 mm or less, and the lower limit is more preferably 0.010 mm or more, and the upper limit is more preferably 0.070 mm or less, and still more preferably 0.050 mm or less. When the average thickness of the fusible resin layer 2 is 0.005 mm or more, the fusible resin is sufficiently present, so that the fused force is good. When the average thickness of the fusible resin layer 2 is 0.100 mm or less, it is possible to suppress a decrease in the current density of the superconducting coil due to a decrease in the space factor of the wire. The average thickness of the fusible resin layer 2 is measured from the cross section of the superconducting rectangular wire 10.

As shown in FIG. 2, the superconducting rectangular wire 10 preferably further includes an insulating resin layer 3 including an insulating resin provided between the wire 1 and the fusible resin layer 2. The insulating resin layer 3 is provided between the outer peripheral surface of the wire 1 and the fusible resin layer 2. When the superconducting rectangular wire 10 includes the insulating resin layer 3, the insulating property can be further improved.

From the viewpoint of good insulation of the electric flow from the wire 1 to the outside, the insulating resin layer 3 preferably includes one or more resins selected from a polyvinyl formal resin, a polyamide-imide resin, a polyimide resin, a polyester resin, or a polyurethane resin.

The lower limit of the average thickness of the insulating resin layer 3 is preferably 0.005 mm or more, more preferably 0.010 mm or more, and the upper limit is preferably 0.100 mm or less, more preferably 0.070 mm or less, still more preferably 0.050 mm or less. When the average thickness of the insulating resin layer 3 is 0.005 mm or more, the insulating resin is sufficiently present, so that the insulating characteristics are good. When the average thickness of the insulating resin layer 3 is 0.100 mm or less, a decrease in the current density of the superconducting coil due to a decrease in the space factor of the wire can be suppressed. The average thickness of the insulating resin layer 3 is measured from the cross section of the superconducting rectangular wire 10.

As shown in FIGS. 1 and 2, W3 is the width (long side) of the wire 1 coated with the insulating resin layer 3 in the cross section of the superconducting rectangular wire 10. T3 is the thickness (short side) of the wire 1 coated with the insulating resin layer 3 in the cross section of the superconducting rectangular wire 10.

In the cross section of the superconducting rectangular wire 10, the radius of curvature (R2) of the corner portion of the fusible resin layer 2 is equal to or less than the radius of curvature (R1) of the corner portion of the wire 1. When the wire 1 is not a circular wire, for example, when the wire 1 is a rectangular wire as shown in FIGS. 1 and 2, there are a plurality of corner portions of the wire 1 and a plurality of corner portions of the fusible resin layer 2 in the cross section of the superconducting rectangular wire 10. When there are a plurality of corner portions, a corner portion of the wire 1 and a corner portion of the fusible resin layer 2 that are closest to each other are compared. That is, the radius of curvature (R2) of a corner portion of the fusible resin layer 2 is equal to or less than the radius of curvature (R1) of a corner portion of the wire 1, the corner portion of the wire 1 being closest to the corner portion having the radius of curvature (R2) of the fusible resin layer 2.

For a conventional superconducting rectangular wire, in the cross section of the superconducting rectangular wire, the radius of curvature (R2) of the corner portion of the fusible resin layer is larger than the radius of curvature (R1) of the corner portion of the wire. On the other hand, for the superconducting rectangular wire 10 according to the embodiment, as shown in FIGS. 1 and 2, in the cross section of the superconducting rectangular wire 10, the radius of curvature (R2) of the surface of the corner portion of the fusible resin layer 2 is equal to or less than the radius of curvature (R1) of the surface of the corner portion of the wire 1. In other words, for the superconducting rectangular wire 10, the

radius of curvature (R2) of the fusible resin layer 2 is smaller than the radius of curvature (R1) of the wire 1, or the radius of curvature (R2) of the fusible resin layer 2 and the radius of curvature (R1) of the wire 1 are the same.

When the radius of curvature (R2) of the fusible resin layer 2 is equal to or less than the radius of curvature (R1) of the wire 1 in the cross section of the superconducting rectangular wire 10, the radius of curvature of the outermost layer of the superconducting rectangular wire 10 can be made smaller than conventional art, so that the void ratio of the superconducting coil affected by the shape of the superconducting rectangular wire 10 can be reduced compared to conventional art, so that quenching can be suppressed.

In the cross section of the superconducting rectangular wire 10, the radius of curvature of the corner portion of the superconducting rectangular wire 10, that is, the radius of curvature (R2) of the corner portion of the fusible resin layer 2 preferably satisfies the following Expressions (1) and (2) .

[Math. 3]

$$0.10 \leq R2 \leq R2_{max} \cdots \text{Expression(1)}$$

$$R2_{max}[\text{mm}] = \sqrt{A \times \frac{\left(\begin{matrix}\text{Cross-sectional width W2 of}\\ \text{superconducting rectangular wire}\end{matrix}\right)\times\left(\begin{matrix}\text{Cross-sectional thickness T2 of}\\ \text{superconducting rectangular wire}\end{matrix}\right)}{4-\pi}} \cdots \text{Expression(2)}$$

In Expression (2), A is a first radius of curvature coefficient. A is preferably 0.06, and more preferably 0.04. As shown in FIGS. 1 and 2, W2 is the width (long side) of the superconducting rectangular wire 10 in the cross section of the superconducting rectangular wire 10, and is the width of the wire 1 coated with the fusible resin layer 2. T2 is the thickness (short side) of the superconducting rectangular wire 10 in the cross section of the superconducting rectangular wire 10, and is the thickness of the wire 1 coated with the fusible resin layer 2. Specifically, W2 is preferably 0.10 mm or more and 5.00 mm or less, and more preferably 0.30 mm or more and 3.00 mm or less. T2 is preferably 0.10 mm or more and 5.00 mm or less, and more preferably 0.30 mm or more and 3.00 mm or less.

When the radius of curvature (R2) of the corner portion of the fusible resin layer 2 satisfies the above Expressions (1) and (2), the void ratio of the superconducting coil can be further reduced, so that quenching can be further suppressed. For this reason, R2 is preferably 0.01 mm or more, and more preferably 0.10 mm or more and 0.40 mm or less.

It is preferable that the wire 1 is a rectangular wire, and the radius of curvature (R1) of the corner portion of the wire 1 satisfies the following Expressions (3) and (4).

[Math. 4]

$$0.10 \leq R1 \leq R1_{max} \cdots \text{Expression (3)}$$

$$R1_{max}[\text{mm}] = \sqrt{B \times \frac{\left(\begin{matrix}\text{Cross-sectional width W1}\\ \text{of wire}\end{matrix}\right)\times\left(\begin{matrix}\text{Cross-sectional thickness T1}\\ \text{of wire}\end{matrix}\right)}{4-\pi}} \cdots \text{Expression(4)}$$

In Expression (4), B is a second radius of curvature coefficient. B is preferably 0.06, and more preferably 0.04.

When the wire 1 is a rectangular wire and the radius of curvature (R1) of the wire 1 is 0.10 mm or more, it is possible to prevent the wire 1 from getting caught between the wires 1 and causing scratches on the surface of the wire 1 when the wire 1 is wound. When the wire 1 is a rectangular wire and the radius of curvature (R1) of the wire 1 is equal to or less than $R1_{max}$, the void ratio of the superconducting coil can be further reduced, so that quenching can be further suppressed.

Next, a method for producing the superconducting rectangular wire 10 will be described.

First, for comparison with the superconducting rectangular wire 10 according to the embodiment, a method for producing a conventional superconducting rectangular wire in which the radius of curvature (R2) of the corner portion of the fusible resin layer is larger than the radius of curvature (R1) of the corner portion of the wire will be described.

In the conventional superconducting rectangular wire, by baking a fusible resin on the outer peripheral surface of the rectangular wire obtained by wire drawing, the outer peripheral surface of the rectangular wire is coated with a fusible resin layer. In the baking process, a liquid varnish is coated on the wire as the wire passes through the die, and then evaporation of the solvent in the varnish proceeds and curing of a part of the resin component proceeds depending on the type of the fusible resin in the furnace to form the fusible resin layer. At the corner portion of the wire, the liquid varnish immediately after being coated spreads due to surface tension and is baked in this state, and as a result, the radius of curvature of the corner portion of the fusible resin layer becomes larger than the radius of curvature of the corner portion of the wire. Furthermore, the thickness of the fusible resin layer at the corner portion is smaller than the thickness of the fusible resin layer at the flat portion (other than the corner portion). For the above reasons, the radius of curvature of the fusible resin layer, which is the outermost layer, is larger than the radius of curvature of the wire, and as a result, it is difficult to largely reduce the void ratio in the superconducting coil.

On the other hand, as for the superconducting rectangular wire 10 of the embodiment, the method of coating the wire 1 with the fusible resin is not limited, but a method of coating the fusible resin by using a varnish obtained by dissolving a thermoplastic fusible resin in a solvent and baking the fusible resin on a round-shaped wire, and a method of coating the fusible resin by extrusion coating the surface of the round-shaped wire with the thermoplastic fusible resin are preferred.

Subsequently, by rolling the round-shaped wire coated with the fusible resin into a rectangular shape, the rectangular-shaped superconducting rectangular wire 10 in which the radius of curvature (R2) of the corner portion of the fusible resin layer 2 is equal to or less than the radius of curvature (R1) of the corner portion of the wire 1 can be obtained. In the rolling process, the amount of strain applied to the outer fusible resin layer 2 is larger than that applied to the wire 1 serving as a core, and as a result, the radius of curvature (R2) of the fusible resin layer 2 is equal to or less than the radius of curvature (R1) of the wire 1.

As for another method of producing the superconducting rectangular wire 10, the fusible resin layer 2 is coated on the outer peripheral surface of the wire 1 by extrusion coating the surface of the wire 1 with the fusible resin such that the radius of curvature (R2) of the fusible resin layer 2 is equal to or less than the radius of curvature (R1) of the wire 1. Thus, the superconducting rectangular wire 10 can be obtained. In the case of extrusion molding, the radius of curvature (R2) of the corner portion of the fusible resin layer 2 which is the outermost layer largely depends on the radius of curvature of the corner portion of the die. Therefore, the radius of curvature (R2) of the fusible resin layer 2 can be adjusted to be small regardless of the radius of curvature (R1) of the corner portion of the wire 1.

In the case where the superconducting rectangular wire 10 includes the insulating resin layer 3, the superconducting rectangular wire 10 can be produced by coating the outer peripheral surface of the round-shaped wire or the wire 1 with the insulating resin layer 3 by an existing method and then applying the method described above using the round-shaped wire or the wire 1 including the insulating resin layer 3.

Next, the superconducting coil according to the embodiment will be described. FIG. 3 is a sectional view showing an example of the superconducting coil according to the embodiment. FIG. 4 is a sectional view showing another example of the superconducting coil according to the embodiment. FIGS. 3 and 4 are each a sectional view when the superconducting coil is cut along a plane including the axis of the winding frame. FIGS. 3 and 4 each show the superconducting coil 50 including the superconducting rectangular wire 10 that does not include the insulating resin layer 3. With reference to FIGS. 3 and 4, the structure is mainly the same except that the superconducting rectangular wire 10 is in one layer in FIG. 3, and the superconducting rectangular wire 10 is in two layers (multilayer) in FIG. 4.

As shown in FIG. 3, the superconducting coil 50 according to the embodiment includes a winding frame 80 and a superconducting portion 60 including the superconducting rectangular wire 10 spirally wound around a body portion 81 of the winding frame 80. The void ratio of the superconducting portion 60 is 4.0% or less. The superconducting portion 60 includes one layer of the superconducting rectangular wire 10.

The superconducting rectangular wire 10 is spirally wound around the body portion 81 from one flange portion 82 to the other flange portion 82 of the winding frame 80. At this time, a gap S1 may exist between the superconducting rectangular wire 10 and an inner surface 82a of the flange portion 82.

In a section when the superconducting coil 50 is cut along a plane including the axis of the winding frame 80 (hereinafter, also simply referred to as a section of the superconducting coil 50), with respect to the superconducting rectangular wires 10 that contact an outer peripheral line 81a of the body portion 81, a void V1 (inner surface void) may exist between two adjacent superconducting rectangular wires 10 (one superconducting rectangular wire 10) and the outer peripheral line 81a of the body portion 81. Furthermore, in the section of the superconducting coil 50, a void V2 (outer surface void) may exist between a straight line L1 connecting the outer peripheral lines of all the superconducting rectangular wires 10 and two adjacent superconducting rectangular wires 10 (one superconducting rectangular wire 10) .

In FIG. 4, the superconducting portion 60 includes a two-layer (multilayer) of the superconducting rectangular wire 10. With respect to the superconducting rectangular wires 10 at the innermost circumference that contact the outer peripheral line 81a of the body portion 81, similarly to the above, the void V1 (inner surface void) may exist between the superconducting rectangular wires 10 and the outer peripheral line 81a. In addition, similarly to the above, in the section

of the superconducting coil 50, the void V2 (outer surface void) may exist between the superconducting rectangular wires 10 and the straight line L1 connecting the outer peripheral lines of all the superconducting rectangular wires 10 arranged in the outermost layer.

Furthermore, a void V3 (internal void) may exist between the superconducting rectangular wires 10 in adjacent layers and between adjacent superconducting rectangular wires 10 in the same layer. Here, as shown in FIG. 4, an example in which the void V3 exists between three superconducting rectangular wires 10 is indicated, but the void V3 may exist between four superconducting rectangular wires 10.

In the section of the superconducting coil 50, a void ratio V of the superconducting portion 60 constituting the superconducting coil 50 is a ratio of the total area of the voids V1, the voids V2, and the voids V3 to the value obtained by subtracting the area of the gaps S1 from the area S of two regions each formed by the outer peripheral line 81a of the body portion 81, the straight line L1 connecting the outer peripheral lines of all the superconducting rectangular wires 10 arranged in the outermost layer, and the inner surfaces 82a of the two flange portions 82.

$$\text{Void ratio V (\%) of superconducting portion} = (V1 + V2 + V3) \times 100 / (S - S1)$$

Next, a method for producing the superconducting coil 50 will be described.

The superconducting rectangular wire 10 is wound around the winding frame 80 by spirally winding the superconducting rectangular wire 10 around the body portion 81 of the winding frame 80. Subsequently, by heating the winding frame 80 around which the superconducting rectangular wire 10 is wound in a reducing gas at a predetermined temperature and for a predetermined period of time, the superconducting coil 50 can be produced.

Since the void ratio of the superconducting portion 60 is 4.0% or less, such a superconducting coil 50 can suppress quenching compared to conventional art.

According to the embodiment described above, by producing the superconducting coil using the superconducting rectangular wire in which the shape of the cross section of each of the wire and the fusible resin layer is controlled, quenching can be suppressed compared to conventional art.

Although the embodiment has been described, the present invention is not limited to the above embodiment, and includes all aspects included in the concept of the present disclosure and the scope of the claims, and may be variously modified within the scope of the present disclosure.

## EXAMPLES

Next, Examples and Comparative Examples will be described, but the present disclosure is not limited to these examples.

(Examples 1 to 3)

A polyamide-imide resin (Neoheat AIOOC, produced by Totoku Toryo Co., Ltd.) as an insulating resin was baked on an NbTi round wire having a surface coated with copper, and then a phenoxy resin (YP-50, produced by Nippon Steel Chemical & Materials Co., Ltd.) as a fusible resin was baked on the NbTi round wire. Subsequently, the wire coated with the insulating resin and the fusible resin was rolled to obtain the superconducting rectangular wire shown in Table 1.

Subsequently, the superconducting rectangular wire was wound in 20 layers around a winding frame made of SUS304 and having a body diameter of 300 mm and a width of 500 mm, and then heated in an argon atmosphere at a temperature of 200°C for 120 minutes to obtain a superconducting coil.

(Example 4)

A superconducting coil was obtained in the same manner as in Example 1 except that the superconducting rectangular wire shown in Table 2 was wound in one layer around the winding frame in Example 1.

(Comparative Examples 1 to 3)

A polyamide-imide resin (Neoheat AIOOC, produced by Totoku Toryo Co., Ltd.) as an insulating resin was baked on an NbTi rectangular wire having a surface coated with copper, and then a phenoxy resin (YP-50, produced by Nippon Steel Chemical & Materials Co., Ltd.) as a fusible resin was baked on the NbTi round wire to obtain the

superconducting rectangular wire shown in Table 1. Subsequently, a superconducting coil was obtained in the same manner as in Example 1.

(Comparative Example 4)

A superconducting coil was obtained in the same manner as in Comparative Example 1 except that the superconducting rectangular wire shown in Table 2 was wound in one layer around the winding frame in Comparative Example 1.
The results of measuring the void ratio of the superconducting portion of each of the superconducting coils obtained in the above Examples and Comparative Examples are shown in Tables 1 and 2.
Furthermore, the superconducting coils obtained in the above Examples and Comparative Examples were cooled with liquid helium, and were repeatedly subjected to energization (current increase rate of 50 A/min) a plurality of times up to a current achieving a design magnetic field. Tables 1 and 2 show results of the maximum reachable magnetic field, the number of training quenches until the maximum reachable magnetic field is achieved, and the number of repetitions of heat cycle (normal temperature and 4K) until the reachable magnetic field decreases after the maximum reachable magnetic field is achieved.

[Table 1]

| | | Example 1 | Example 2 | Example 3 | Comparative Example 1 | Comparative Example 2 | Comparative Example 3 |
|---|---|---|---|---|---|---|---|
| Wire | Width W1 (mm) | 2.28 | 1.69 | 1.30 | 2.27 | 1.67 | 1.31 |
| | Thickness T1 (mm) | 1.26 | 1.08 | 1.10 | 1.27 | 1.07 | 1.11 |
| | Radius of curvature R1 (mm) | 0.40 | 0.35 | 0.30 | 0.40 | 0.35 | 0.30 |
| | R 1 max (mm) | 0.45 | 0.36 | 0.32 | 0.45 | 0.35 | 0.32 |
| Insulating coating layer | Average thickness (mm) | 0.030 | 0.030 | 0.020 | 0.030 | 0.030 | 0.020 |
| | Width W3 (mm) | 2.34 | 1.75 | 1.34 | 2.33 | 1.73 | 1.35 |
| | Thickness T3 (mm) | 1.32 | 1.14 | 1.14 | 1.33 | 1.13 | 1.15 |
| | Radius of curvature R3 (mm) | 0.39 | 0.33 | 0.29 | 0.43 | 0.38 | 0.32 |
| Fusible coating layer | Average thickness (mm) | 0.035 | 0.035 | 0.025 | 0.035 | 0.035 | 0.025 |
| | Width W2 (mm) | 2.41 | 1.82 | 1.39 | 2.40 | 1.80 | 1.40 |
| | Thickness T2 (mm) | 1.39 | 1.21 | 1.19 | 1.40 | 1.20 | 1.20 |
| | Radius of curvature R2 (mm) | 0.39 | 0.31 | 0.28 | 0.47 | 0.42 | 0.35 |
| | R2max (mm) | 0.48 | 0.39 | 0.34 | 0.48 | 0.39 | 0.34 |
| Superconducting coil | Void ratio V | 2.9% | 2.7% | 2.7% | 4.4% | 5.3% | 4.4% |
| Maximum reachable magnetic field/ design magnetic field | | 100% | 100% | 100% | 80% | 80% | 85% |
| Number of training quenches | | 1 | 0 | 0 | 10 | 7 | 6 |
| Number of heat cycles until reachable magnetic field decreases (after training) | | ∞ | ∞ | ∞ | 3 | 5 | 8 |

[Table 2]

| | | Example 4 | Comparative Example 4 |
|---|---|---|---|
| Wire | Width W1 (mm) | 1.69 | 1.67 |
| | Thickness T1 (mm) | 1.08 | 1.07 |
| | Radius of curvature R1 (mm) | 0.35 | 0.35 |
| | R 1 max (mm) | 0.36 | 0.35 |
| Insulating resin layer | Average thickness (mm) | 0.030 | 0.030 |
| | Width W3 (mm) | 1.75 | 1.73 |
| | Thickness T3 (mm) | 1.14 | 1.13 |
| | Radius of curvature R3 (mm) | 0.33 | 0.38 |
| Fusible resin layer | Average thickness (mm) | 0.035 | 0.035 |
| | Width W2 (mm) | 1.82 | 1.80 |
| | Thickness T2 (mm) | 1.21 | 1.20 |
| | Radius of curvature R2 (mm) | 0.31 | 0.42 |
| | R2max (mm) | 0.39 | 0.39 |
| Superconducting coil | Void ratio V | 2.7% | 5.3% |
| Maximum reachable magnetic field/ design magnetic field | | 99% | 79% |
| Number of training quenches | | 1 | 8 |
| Number of heat cycles until reachable magnetic field decreases (after training) | | ∞ | 4 |

As shown in Tables 1 and 2, in Examples 1 to 4, as a result of producing the superconducting coil using the superconducting rectangular wire in which the radius of curvature (R2) of the corner portion of the fusible resin layer is equal to or less than the radius of curvature (R1) of the corner portion of the wire in the cross section of the superconducting rectangular wire, the void ratio of the superconducting portion could be greatly reduced compared to conventional art, so that quenching could be suppressed. On the other hand, in Comparative Examples 1 to 4, as a result of producing the superconducting coil by using the superconducting rectangular wire in which the radius of curvature (R2) of the fusible resin layer is larger than the radius of curvature (R1) of the wire, the void ratio of the superconducting portion did not decrease and quenching could not be suppressed.

EXPLANATION OF REFERENCE NUMERALS

1 wire
2 fusible resin layer
3 insulating resin layer
10 superconducting rectangular wire for superconducting coil
50 superconducting coil
60 superconducting portion
80 winding frame
81 body portion of winding frame
81a outer peripheral line of body portion
82 flange portion
82a inner surface of flange portion
T1 thickness of wire in cross section of superconducting rectangular wire
T2 thickness of superconducting rectangular wire in cross section of superconducting rectangular wire (thickness of wire coated with fusible resin layer)

T3 thickness of wire coated with insulating resin layer
W1 width of wire in cross section of superconducting rectangular wire
W2 width of superconducting rectangular wire in cross section of superconducting rectangular wire (width of wire coated with fusible resin layer)
W3 width of wire coated with insulating resin layer
V1, V2, V3 void
S1 gap

## Claims

**1.** A superconducting rectangular wire for a superconducting coil, comprising:

an NbTi-based or $Nb_3Sn$-based wire having a surface coated with a copper-based material; and
a fusible resin layer including a thermoplastic fusible resin and coating an outer peripheral surface of the wire, wherein
in a cross section of the superconducting rectangular wire for a superconducting coil, a radius of curvature (R2) of a corner portion of the fusible resin layer is equal to or less than a radius of curvature (R1) of a corner portion of the wire.

**2.** The superconducting rectangular wire for a superconducting coil according to claim 1, wherein the fusible resin layer has an average thickness of 0.005 mm or more and 0.100 mm or less.

**3.** The superconducting rectangular wire for a superconducting coil according to claim 1 or 2, wherein in the cross section of the superconducting rectangular wire for a superconducting coil, the radius of curvature (R2) of the corner portion of the fusible resin layer satisfies the following Expressions (1) and (2):

[Math. 1]

$$0.10 \leq R2 \leq R2_{max} \cdots \text{Expression(1)}$$

$$R2_{max}[\mathrm{mm}] = \sqrt{A \times \frac{\begin{pmatrix}\text{Cross-sectional width W2 of}\\ \text{superconducting rectangular wire}\end{pmatrix} \times \begin{pmatrix}\text{Cross-sectional thickness T2 of}\\ \text{superconducting rectangular wire}\end{pmatrix}}{4-\pi}} \cdots$$

Expression(2)

wherein A is a first radius of curvature coefficient in Expression (2).

**4.** The superconducting rectangular wire for a superconducting coil according to any one of claims 1 to 3, wherein the fusible resin layer includes one or more resins selected from a phenoxy resin, a polyamide resin, or a polyester resin.

**5.** The superconducting rectangular wire for a superconducting coil according to any one of claims 1 to 4, further comprising an insulating resin layer including an insulating resin provided between the wire and the fusible resin layer.

**6.** The superconducting rectangular wire for a superconducting coil according to claim 5, wherein the insulating resin layer includes one or more resins selected from a polyvinyl formal resin, a polyamide-imide resin, a polyimide resin, a polyester resin, or a polyurethane resin.

**7.** The superconducting rectangular wire for a superconducting coil according to claim 5 or 6, wherein the insulating resin layer has an average thickness of 0.005 mm or more and 0.100 mm or less.

**8.** The superconducting rectangular wire for a superconducting coil according to any one of claims 1 to 7, wherein the wire is a rectangular wire, and the radius of curvature (R1) of the corner portion of the wire is 0.10 mm or more and 0.40 mm or less.

**9.** The superconducting rectangular wire for a superconducting coil according to any one of claims 1 to 8, wherein the wire is a rectangular wire, and the radius of curvature (R1) of the corner portion of the wire satisfies the following Expressions (3) and (4):

[Math. 2]

$$0.10 \leq R1 \leq R1_{max} \quad \cdots \text{ Expression (3)}$$

$$R1_{max}[\text{mm}] = \sqrt{B \times \frac{\left(\begin{array}{c}\text{Cross-sectional width W1}\\ \text{of wire}\end{array}\right) \times \left(\begin{array}{c}\text{Cross-sectional thickness T1}\\ \text{of wire}\end{array}\right)}{4-\pi}} \quad \cdots$$

Expression(4)

wherein B is a second radius of curvature coefficient in Expression (4).

**10.** A superconducting coil comprising:

a winding frame; and
a superconducting portion including the superconducting rectangular wire for a superconducting coil according to any one of claims 1 to 9, the superconducting rectangular wire being spirally wound around a body portion of the winding frame, wherein
the superconducting portion has a void ratio of 4.0% or less.

FIG. 1

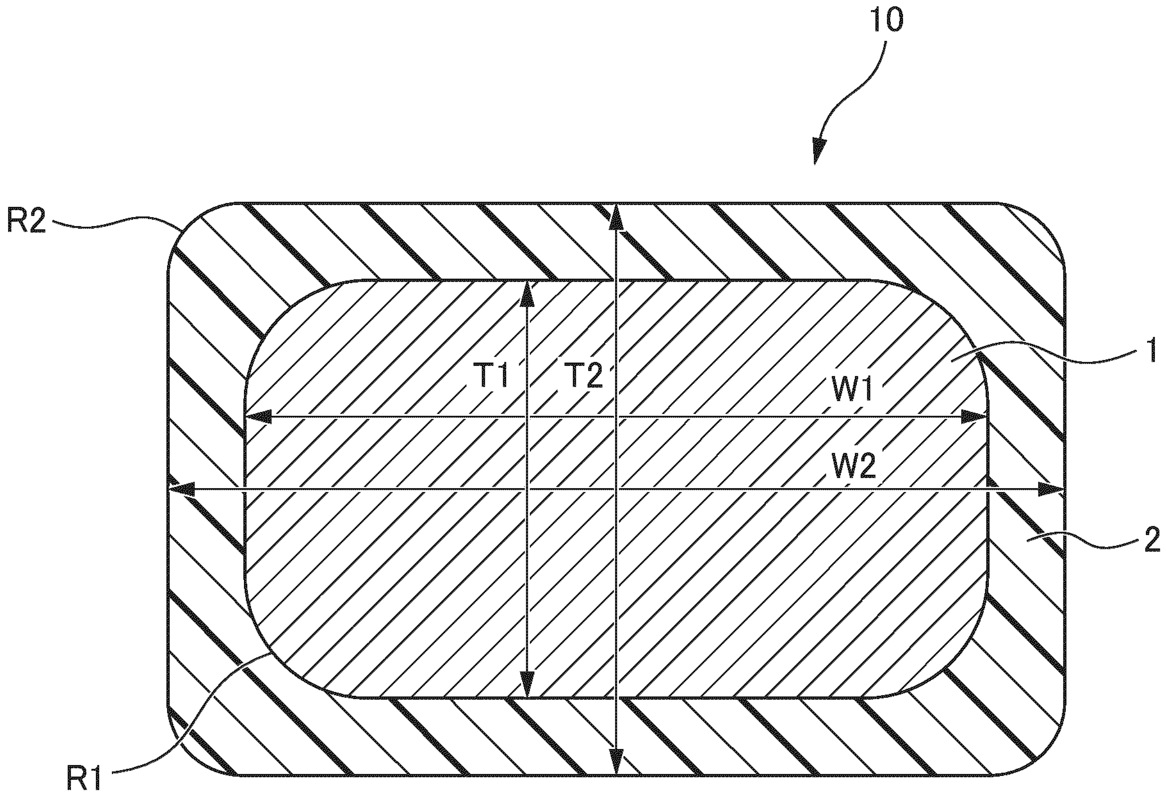

FIG. 2

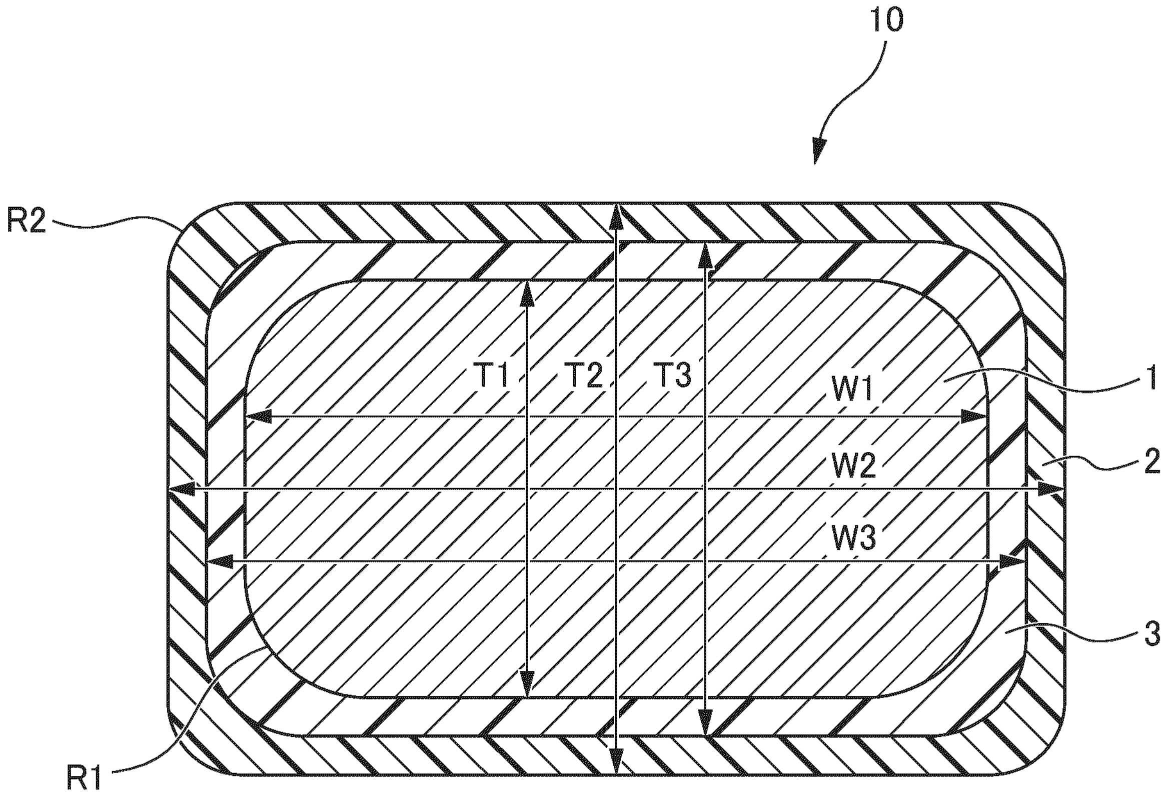

FIG. 3

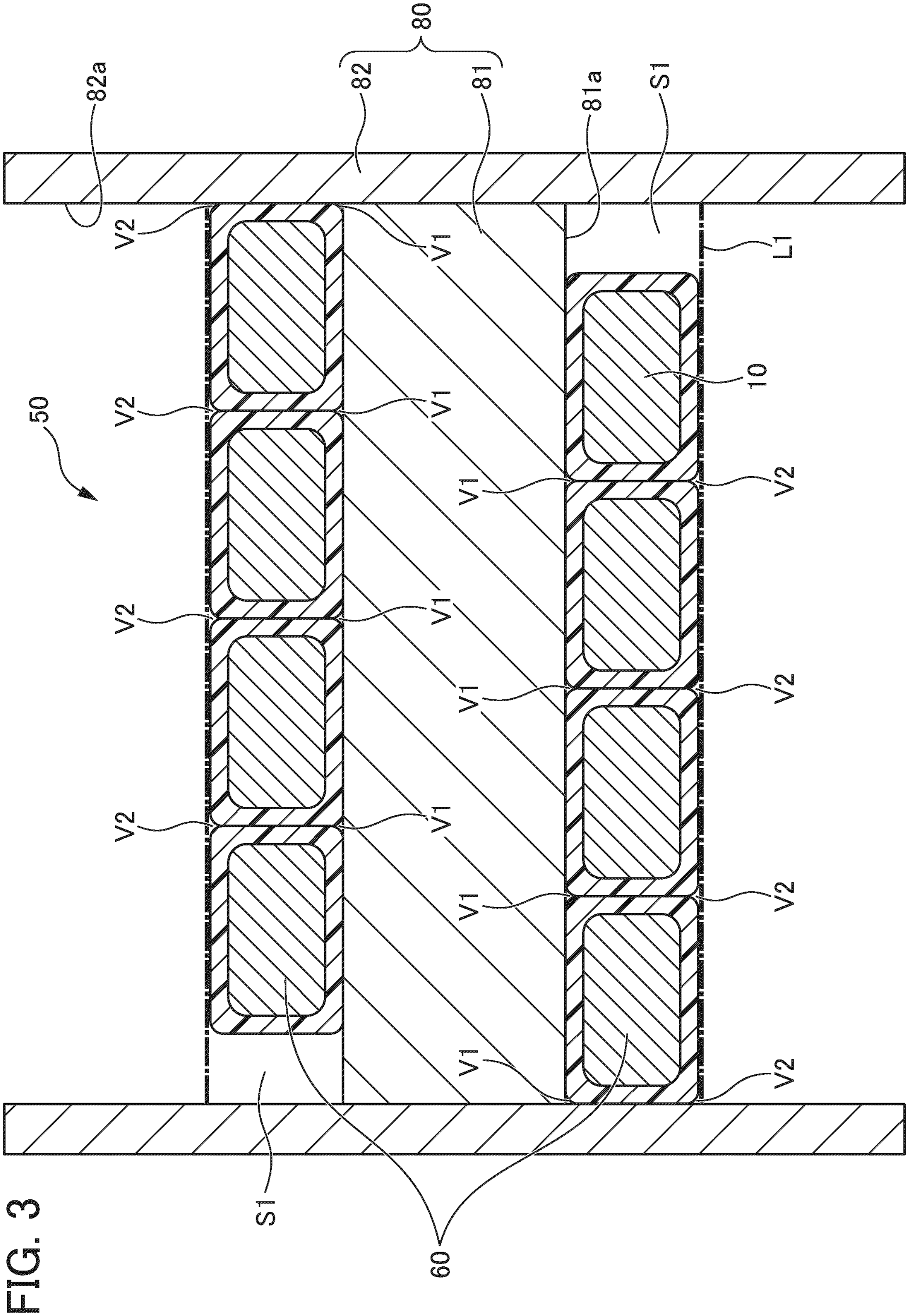

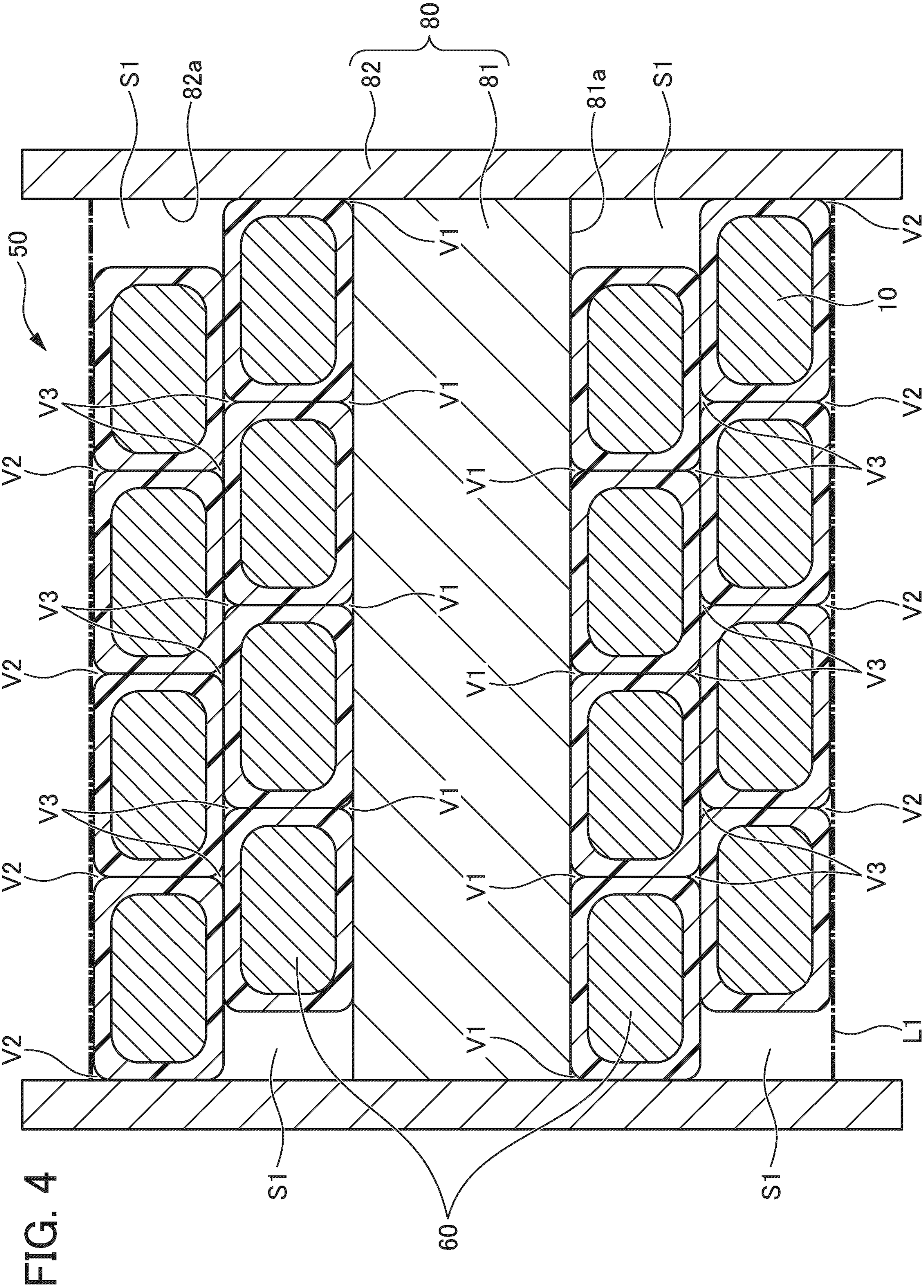


FIG. 4

## INTERNATIONAL SEARCH REPORT

International application No.
**PCT/JP2022/021277**

**A. CLASSIFICATION OF SUBJECT MATTER**

***H01F 6/06***(2006.01)i; ***H01B 7/02***(2006.01)i; ***H01B 12/04***(2006.01)i
FI: H01F6/06 140; H01B7/02 Z; H01B7/02 C; H01B12/04

According to International Patent Classification (IPC) or to both national classification and IPC

**B. FIELDS SEARCHED**

Minimum documentation searched (classification system followed by classification symbols)

H01F5/00-6/00; H01F27/28; H01F41/00; H01B7/00; H01B12/00; H01B13/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-84661 A (KABUSHIKI KAISHA TOSHIBA) 25 March 1994 (1994-03-25) paragraphs [0001]-[0012], fig. 1-5 | 1-10 |
| Y | JP 8-172013 A (KABUSHIKI KAISHA TOSHIBA) 02 July 1996 (1996-07-02) paragraphs [0056]-[0067], fig. 7-13 | 1-10 |
| Y | JP 2010-55965 A (THE FURUKAWA ELECTRIC CO., LTD.) 11 March 2010 (2010-03-11) paragraphs [0004]-[0030], fig. 1-5 | 1-10 |
| Y | JP 2009-123418 A (NIPPON SOKEN INC.) 04 June 2009 (2009-06-04) paragraphs [0007]-[0038], fig. 1-3 | 1-10 |
| Y | JP 2000-113746 A (KABUSHIKI KAISHA KOBE SEIKO SHO) 21 April 2000 (2000-04-21) paragraphs [0008]-[0031], fig. 1-3 | 1-10 |
| Y | Microfilm of the specification and drawings annexed to the request of Japanese Utility Model Application No. 202464/1982 (Laid-open No. 105710/1984) (SUMITOMO HEAVY INDUSTRIES, LTD.) 16 July 1984 (1984-07-16), specification, p. 1, line 10 to p. 7, line 14, fig. 1, 2 | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 July 2022** | **19 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
**PCT/JP2022/021277**

C. DOCUMENTS CONSIDERED TO BE RELEVANT

| Category* | Citation of document, with indication, where appropriate, of the relevant passages | Relevant to claim No. |
|---|---|---|
| Y | JP 2018-14191 A (THE FURUKAWA ELECTRIC CO., LTD.) 25 January 2018 (2018-01-25) paragraphs [0012]-[0043], fig. 1-4 | 2, 7 |

Form PCT/ISA/210 (second sheet) (January 2015)

**INTERNATIONAL SEARCH REPORT**
**Information on patent family members**

International application No.
**PCT/JP2022/021277**

| Patent document cited in search report | Publication date (day/month/year) | Patent family member(s) | Publication date (day/month/year) |
|---|---|---|---|
| JP 6-84661 A | 25 March 1994 | (Family: none) | |
| JP 8-172013 A | 02 July 1996 | US 5708405 A<br>column 11, line 26 to column 14, line 10, fig. 10-16<br>GB 2294592 A<br>KR 10-1996-0015611 A | |
| JP 2010-55965 A | 11 March 2010 | (Family: none) | |
| JP 2009-123418 A | 04 June 2009 | (Family: none) | |
| JP 2000-113746 A | 21 April 2000 | (Family: none) | |
| JP 59-105710 U1 | 16 July 1984 | (Family: none) | |
| JP 2018-14191 A | 25 January 2018 | US 2019/0156970 A1<br>paragraphs [0032]-[0075], fig. 1-4<br>WO 2018/016498 A1<br>EP 3489970 A1<br>CN 109564798 A<br>KR 10-2019-0031277 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6276406 B